# EUROPÄISCHE PATENTSCHRIFT

(11) **EP 0 758 620 B1**
(45) Veröffentlichungstag und Bekanntmachung des Hinweises auf die Patenterteilung: **09.04.2003**
(21) Anmeldenummer: 96112917.8
(22) Anmeldetag: 10.08.1996
(51) Int. Cl.: B65D 90/50, B65D 90/46, G01M 3/18

(54) **Innenauskleidung für Flüssigkeits-, insbesondere Benzintanks und damit hergestellter Tank**
Inner lining for tanks, in particular for fuel tanks and a tank fabricated therewith
Garniture intérieure pour réservoirspour liquides en particulier essence et réservoir fabriqué avec celle-là

(30) Priorität: 14.08.1995 DE 29513086 U; 29.05.1996 DE 19621469
(43) Veröffentlichungstag der Anmeldung: 19.02.1997
(73) Patentinhaber: Wülfing + Hauck GmbH + Co. KG, 34260 Kaufungen (DE)
(72) Erfinder: Hauck, Erich, 34260 Kaufungen (DE)
(74) Vertreter: Freiherr von Schorlemer, Reinfried, Dipl.-Phys.

(56) Entgegenhaltungen:
- EP-A- 0 003 402
- EP-A- 0 069 303
- CH-A- 487 046
- US-A- 4 613 922

## Beschreibung

Die Erfindung betrifft eine Innenauskleidung und einen Flüssigkeitstank nach den Oberbegriffen der Ansprüche 1 und 14.

Bekannte Innenauskleidungen und Flüssigkeitstanks dieser Art (DE 76 17 733 U1) enthalten eine elektrisch leitende Zwischenschicht bzw. Auskleidung aus einem Metallfaservlies, z.B. Edelstahlwolle, und eine Innenhülle bzw. Einlage aus einem benzinbeständigen Material, z.B. einem Nitrilkautschuk. Die Zwischenschicht ist luftdurchlässig und dient dazu, zwischen der Innenhülle und der Tankwand einen Mindestabstand auch dann aufrechtzuerhalten, wenn in dem zwischen Innenhülle und Tankwand befindlichen Raum in bekannter Weise ein Vakuum hergestellt wird, das einerseits ein dichtes Anschmiegen der Innenhülle an die Tankwand sicherstellt und andererseits eine Leckkontrolle ermöglicht.

Die Innenhülle ist diffusions- bzw. flüssigkeitsdicht und im Gegensatz zu den bei Heizöltanks verwendeten PVC-Folien beständig gegenüber dem zu lagernden Benzin. Wegen ihrer Herstellung aus Nitrilkautschuk besitzt sie allerdings verschiedene Nachteile. Da Nitrilkautschuk ein gummiartiges, elastisches Material ist, ist die Innenhülle für den Tankbau nicht besonders gut geeignet, wo möglichst biegeschlaffe, leicht konfektionierbare und mit üblichen Mitteln schweißbare Folien bevorzugt werden. Außerdem sind derartige Innenhüllen zwar mit ihrer Rückseite über die Zwischenschicht geerdet. Da sie jedoch aus einem Material mit hohem Durchgangs- und Oberflächenwiderstand bestehen, ist ihre mit Benzin in Berührung kommende Vorderseite nicht ausreichend antistatisch. Das hat zur Folge, daß aufgrund unvermeidbarer elektrischer Aufladungen die Gefahr von Explosionen besteht. Gefahren dieser Art bestehen vor allem auch beim Begehen eines mit einer solchen Innnenauskleidung versehenen Benzintanks, da sich hierbei Funken durch Reibungselektrizität bilden können.

Aufgrund dieser Mängel bekannter Innenhüllen werden bis heute in Verbindung mit Tanks für Benzin und andere leicht entflammbare bzw. explosionsgefährdete Flüssigkeiten keine Innenauskleidungen der eingangs bezeichneten Gattung verwendet. Erst recht sind derartige Innenauskleidungen bisher von den zuständigen Aufsichtsbehörden nicht zugelassen worden, zumal die einschlägigen Bestimmungen unterschiedlich sind. So werden z.B. einerseits in Verbindung mit Benzin od. dgl. Innenhüllen aus nicht mehr als 2 mm starken Folien gefordert, weil angeblich bis zu diesen Stärken bei Stoffen der Explosionsgruppen II A und II B nicht mit Entzündungen zu rechnen ist. Andererseits wird jedoch zur Vermeidung von Zündgefahren infolge elektrostatischer Aufladungen gefordert, daß bei Behälterauskleidungen, die aus nicht leitfähigen oder aus aufladbaren Materialen bestehen, durch Zusätze von Ruß od. dgl. sichergestellt sein muß, daß die Oberflächen- bzw. Ableitwiderstände an keiner Stelle 10⁹ bzw. 10⁸ Ohm übersteigen dürfen (Berufsgenommenschaft der chemischen Industrie, Richtlinie Nr. 4 ZH 1/200 "Statische Elektrizität", Oktober 1989).

Mit preisgünstigen Folien, die sich in der beim Tankbau üblichen Weise verarbeiten lassen, sind die genannten Bestimmungen bisher nicht erfüllbar. Es ist zwar bereits versucht worden, aus Kunststofffolien bestehende, faltbare Abdeckungen, die bei Tanks für flüchtige Bestandteile aufweisende Flüssigkeiten dazu verwendet werden, das Entweichen dieses flüchtigen Bestandteile an die Atmosphere zu verhindern, auf der der Tankwand oder dem Abdeckungsinnenraum zugewandten Seite mit einer leitenden Schicht zu überziehen oder in Sandwichbauweise mit einer innen liegenden Metallschicht zu versehen (EP-A-0 003 402). Diese Versuche sind jedoch fehlgeschlagen. Auf die Innen- oder Außenseite aufgebrachte Schichten neigen beim Gebrauch derartiger Abdeckungen dazu, von den Trägerfolien abzublättern, weil sie beim Gebrauch Ständigen Lastwechseln unterworfen sind und dabei Zusammengelegt, gefaltet und/oder geknickt werden. In Sandwichbauweise hergestellte Abdeckungen dieser Art sind dagegen einerseits aufwendig in der Herstellung, insbesondere wenn die leitenden Schichten aus Metallfolien oder metallisierten Beschichtungen auf einer Trägerfolie bestehen, und können andererseits nicht sicher verhindern, daß in einem Tank arbeitende Personen durch Reibungselektrizität verursachte Explosionen auslösen. Daher ist es bis heute üblich, Benzin und ähnliche Explosionsstoffe wie z. B. Kerosin in doppelwandigen Tanks aus Stahl od. dgl. zu lagern, deren Innenwände in der Regel mit teuren, gesundheitsgefährdenden Innenbeschichtungen aus Polyesterharz od. dgl. versehen sind. Der konstruktive und damit auch finanzielle Aufwand zur Herstellung von Benzintanks od. dgl. ist daher beträchtlich. Entsprechendes gilt für bekannte Innenauskleidungen, bei denen die Innenseite der Tankwand mit einer distanzhaltende Mittel aufweisenden Folie versehen wird und auf diese dann eine auf Porenfreiheit überprüfte Kunststoffschicht und eine elektrisch leitende Beschichtung aufgespritzt werden (EP-A-069 303, US-A-4 613 922).

Demgegenüber liegt der Erfindung die Aufgabe zugrunde, die Innenauskleidung der eingangs bezeichneten Gattung so auszubilden, daß sie preisgünstig hergestellt und mit den beim Tankbau üblichen Mitteln verarbeitet werden kann. Außerdem soll ein mit einer solchen Innenhülle versehener Tank geschaffen werden.

Zur Lösung dieser Aufgabe dienen die kennzeichnenden Merkmale der Ansprüche 1 und 14.

Weitere vorteilhafte Merkmale der Erfindung ergeben sich aus den Unteransprüchen.

Die Erfindung wird nachfolgend in Verbindung mit der beiliegenden Zeichnung an einem Ausführungsbeispiel näher erläutert. Es zeigen:
Fig. 1 grob schematisch einen üblichen Benzintank;
Fig. 2 einen schematischen Querschnitt durch den Benzintank nach Fig. 1;
Fig. 3 eine vergrößerte Einzelheit X nach Fig. 1; und
Fig. 4 einen vergrößerten Schnitt durch den Benzintank nach Fig. 1 im Bereich seines Deckels.

In das obere Ende eines geeigneten Benzintanks 1 üblicher Bauweise ist ein Dom 2 mit einem Flansch 3 eingeschweißt, an den ein Deckel 4 angeschraubt werden kann. An der Innenwand des Benzintanks 1 liegt eine Zwischenschicht 5 aus einem elektrisch leitenden, luftdurchlässigen Material und an deren Innenseite eine flexible Innenhülle 6 an. Im oberen Teil des Doms 2 ist die Zwischenschicht 5 in der Regel durch eine Schicht aus Moosgummi od. dgl. ersetzt, damit der Zwischenraum zwischen Innenhülle 6 und Tankwand nach oben abgedichtet ist. Diese Schicht dient außerdem als Auflage für einen Spannring 7, mittels dessen die Innenhülle 6 fest im Dom 2 eingespannt wird.

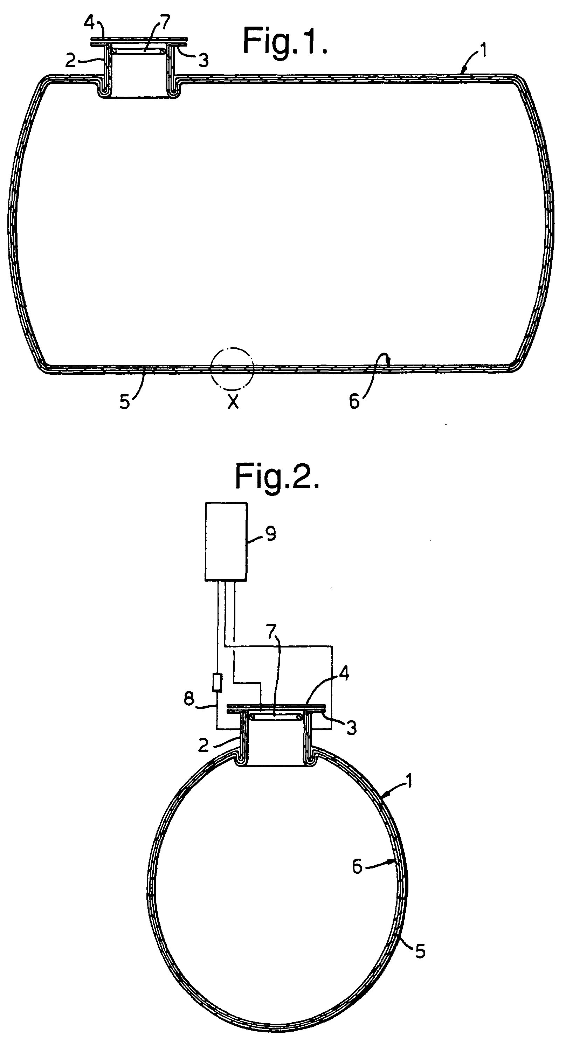

An einer geeigneten Stelle der Tankwand ist ein schematisch angedeutetes, rohrförmiges Winkelstück 8 (Fig. 2) eingesetzt, dessen eines Ende in einen zwischen Tankwand und Zwischenschicht 5 gebildeten, vergrößerten Zwischenraum ragt, der z.B. von einem auf dem Winkelstück 8 befestigten Abdeckteller gebildet ist. An das freie Ende des Winkelstücks 8 wird eine zu einem üblichen, nur in Fig. 2 angedeuteten Leckanzeigegerät 9 führende Saugleitung zur Herstellung eines Vakuums zwischen Tankwand und Zwischenschicht 5 angeschlossen.

Innenauskleidungen dieser Art sind allgemein bekannt und brauchen daher nicht näher erläutert werden (DE 69 37 614 U1, DE 76 17 733 U1).

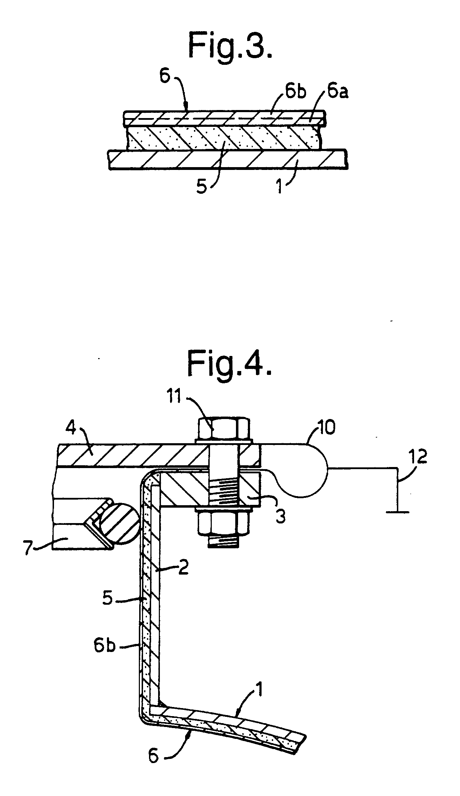

Erfindungsgemäß weist die Innenhülle 6 auf ihrer der Zwischenschicht 5 zugewandten Seite eine diffusionsdichte Schicht 6a auf, die gegenüber der zu lagernden Flüssigkeit, insbesondere Benzin, beständig ist. Dieser Teil der Innenhülle 6 sorgt somit für die erforderliche Dichtheit und Beständigkeit. Dagegen weist die Innenhülle 6 auf ihrer dem Tankinneren zugewandten und mit der Flüssigkeit unmittelbar in Berührung kommenden Seite eine Schicht 6b auf, die ebenfalls benzinbeständig ist und zusätzlich eine ausreichende elektrische Leitfähigkeit besitzt. Diese Schicht 6b ist zweckmäßig mittels einer elektrisch leitenden Lasche 10 aus einem Metall od. dgl. verbunden, die über den Dom 2 nach außen geführt und dort geerdet ist. Wie die stark vergrößerte Schnittdarstellung in Fig. 4 zeigt, ist das obere Ende der Innenhülle 6 zu diesem Zweck z.B. zwischen dem Flansch 3 und dem mittels einer Anzahl von Schrauben 11 an diesem befestigten Deckel 4 eingespannt, wobei die z.B. aus einem Kupferkabel hergestellte Lasche 10 zwischen der leitfähigen Schicht 6b und der Unterseite des Deckels 4 angeordnet wird. Die Lasche 10 ist z.B. über eine separate Leitung 12 an Masse gelegt, obwohl es auch möglich wäre, den Deckel 4 aus einem gut leitenden Material, insbesondere einem Metall, herzustellen und sowohl diesen als auch den Tank 1 selbst gut zu erden. Bei Bedarf kann die Schicht 6b auf ihrer Innenseite zusätzlich mit die Erdung verbessernden, mit der Lasche verbundenen Streifen aus leitendem Material versehen sein. Die Schicht 6b verhindert damit elektrische Aufladungen und Funkenbildungen im Inneren des Tanks 1.

Aus der beschriebenen Ausbildung der Innenhülle 6 ergibt sich, daß beide Schichten 6a und 6b benzinbeständig sind. Die Schicht 6a ist zusätzlich diffusionsdicht, doch muß sie nicht elektrisch leitend sein. Dagegen ist die Schicht 6b elektrisch leitend, doch muß sie nicht diffusionsdicht sein.

Es werden nachfolgend zwei Ausführungsbeispiele für die Innenhülle 6 angegeben.

### Beispiel 1

Die zweischichtige Innenhülle 6 wird vorzugsweise durch Dublieren aus zwei Folien hergestellt, von denen die eine die Eigenschaften der Schicht 6a und die andere die Eigenschaften der Schicht 6b besitzt. Dabei wird unter "Dublieren" in der Kunststofftechnik allgemein verstanden, daß die beiden Folien unter Anwendung von Druck und Wärme mit Hilfe von Pressen oder Kalandern zusammengebracht werden, damit sie einen innigen Verbund eingehen.

Zur Erzielung der beschriebenen Eigenschaften wird z.B. von einer Folie ausgegangen, die von der Fa. Wolff Walsrode AG, DE-29664 Walsrode, unter der Handelsbezeichnung "Walopur" vertrieben wird. Hierbei handelt es sich um eine transparente, trägerfreie, extrudierte Folie aus thermoplastischem Polyurethan. Eine Folie dieser Art in Form einer Polyurethan-Ester-Folie (z.B. "Walopur 2100" oder "Walopur 2102") wird z.B. in einer Stärke von 600 µ ± 10 % für die Schicht 6a angewendet. Eine entsprechende, jedoch z.B. aus einer Polyurethan-Ether-Folie bestehende Folie (z.B. "Walopur 2201 U") wird bei ihrer Herstellung durch Zusatz von Ruß elektrisch leitend gemacht und mit einer Stärke von z.B. 150 µ als Schicht 6b verwendet. Beide Folien werden durch Dublieren zur einer einzigen Folie vereinigt, aus der dann die Innenhülle 6 hergestellt wird.

Die beschriebene, dublierte Folie bringt den Vorteil mit sich, daß sie an ihren Nahtstellen mit den bei Tankauskleidungen üblichen Mitteln, z.B. mittels Heizkeil- oder HF-Schweißung, verschweißt werden kann, wie dies beim Konfektionieren der Innenhülle in Abhängigkeit von der jeweiligen Tankform erforderlich ist. Vorteilhaft ist ferner, daß trotz der beiden Schichten 6a,6b eine einzige, zusammenhängende Innenhülle 6 erhalten wird, d.h. nur eine einzige Hülle konfektioniert und in den Tank eingebaut werden braucht. Dies ist vor allem wichtig bei der Auskleidung von vergleichsweise großen Tanks mit beispielsweise Durchmessern von zwei Metern oder mehr und Längen von sieben Metern oder mehr. Ein weiterer wesentlicher Vorteil ergibt sich dadurch, daß eine vergleichsweise dicke, diffusionsdichte Schicht mit einer vergleichsweise dünnen, elektrisch leitenden Schicht zusammengefügt werden kann. Dadurch kann die Innenhülle 6 insgesamt preisgünstig hergestellt und angeboten werden, obwohl die elektrisch leitende, für die Schicht 6b verwendete Folie im Vergleich zur diffusionsdichten Folie vergleichsweise teuer ist. Weiter ergibt sich der Vorteil, daß die fertige Innenhülle 6 als Ganzes aufgeblasen und vor ihrem Einbau auf Dichtheit geprüft werden kann, wie dies bei Innenhüllen für Heizöltanks allgemein üblich ist. Schließlich bringt die beschriebene Innenhülle 6 den besonderen Vorteil mit sich, daß sich kein Problem dadurch ergibt, daß die Schicht 6b wegen des Zusatzes von Ruß nicht immer ausreichend diffusionsdicht ist. Weil die Schicht 6b auf ihrer Rückseite an der Schicht 6a anliegt, genügt es, wenn diese Schicht 6a diffusionsdicht ist. Daher kann jede der beiden Schichten 6a,6b ganz nach den Anforderungen ausgewählt und hergestellt werden, die an die Dichtheit einerseits bzw. die elektrische Leitfähigkeit andererseits gestellt sind. Gleichzeitig ist die Innenhülle 6 insgesamt wesentlich dünner als 2 mm, so daß bei ihrer Anwendung schon aus diesem Grund die Explosionsgefahr gering ist. Daher können mit der erfindungsgemäßen Innenhülle 6 alle Anforderungen erfüllt werden, die bis heute an die Innenauskleidung von Tanks für leicht entflammbare bzw. explosionsgefährdete Flüssigkeiten wie z.B. Benzin gestellt werden.

### Beispiel 2

Bei einer zweiten, derzeit als am besten empfundenen Ausführungsform der Erfindung wird ebenfalls von der beschriebenen Folie "Walopur" für die Schicht 6a ausgegangen, und zwar in Form der Polyurethan-Ester-Folie "Walopur 2102 AB". Die Dicke der Folie beträgt hier 650 µ ± 10 %, so daß sie diffusionsdicht ist. Auf die eine Oberfläche dieser Folie wird eine Schicht aus einem elektrisch leitfähigen Polyanilin aufgebracht. Diese Schicht bildet die elektrisch leitende Schicht 6b in Fig. 3. Als am besten für diesen Zweck hat sich bisher ein Polyanilin erwiesen, das von der Firma Zipperling Kessler & Co. in DE-22904 Ahrensburg hergestellt und unter dem Handelsnamen "Versicon" vertrieben wird ("Versicon" ist ein eingetragenes Warenzeichen der Allied Signal Inc. in Morristown, USA). Laut Datenblatt vom September 1995 handelt es sich hierbei um ein intrinsisch leitfähiges Polymer, das kommerziell mit einer spezifischen Leitfähigkeit von ca. 5 S/cm und in einer in einem UV-Bindelack dispergierbaren, nach verschiedenartigen Methoden verarbeitbaren Form hergestellt wird. Im leitfähigen Zustand besitzt das Polymer eine grüne Farbe. Chemisch betrachtet ist das Polyanilin "Versicon" ein konjugiertes Polymer aus oxidativ miteinander gekuppelten Anilin-Monomeren, das mit einer organischen Säure zu einem polymeren Radikal-Kation-Salz umgesetzt wurde.

Die Beschichtung der einen Oberfläche der genannten Folie mit dem Polyanilin erfolgt durch Herstellung einer Dispersion von reinem Polyanilin in einem sog. UV-Bindelack, d.h. einem Bindemittel in Form eines durch UV-Licht härtbaren Lacks, und anschließendes Auftragen auf die Folie durch Rakeln mit einem Rakelmesser. Danach wird die hergestellte Schicht mit UV-Licht gehärtet, vorzugsweise mit UV-A-Strahlung von ca. 380 nm oder mit einer Xenonlampe. Die Dicke der aufgebrachten Schicht 6b beträgt vorzugsweise 2 - 100 µ.

Die mit der Innenhülle nach Beispiel 2 erhaltenen Vorteile entsprechen im wesentlichen denen, die oben in Verbindung mit dem Beispiel 1 angegeben wurden.

Die beiden beschriebenen Beispiele können dadurch abgewandelt werden, daß die Dispersion in anderer Weise, z.B. mit Hilfe einer Spritzpistole oder durch Tiefdruck aufgetragen wird. Außerdem kann als Ausgangsmaterial eine andere Folie, z.B. eine 400 - 500 µ dicke Fluorkunststoff-Folie verwendet werden. Hierbei handelt es sich insbesondere um eine Folie aus einem Terpolymer der drei Monomeren Tetrafluorethylen, Hexafluoropropylen und Vinylidenfluorid. Als besonders geeignet hat sich eine Fluorkunststoff-Folie erwiesen, die von der Fa. Nowofol Kunststoffprodukte GmbH in DE 83313 Siegsdorf u.a. unter den Bezeichnungen TFB 7100 und TFB 7200 angeboten wird. Da derartige Folien eine Oberfläche besitzen, die nicht ausreichend haftfest für die hier aufzubringenden Schichten ist, wird die zu beschichtende Oberfläche zunächst vorbehandelt bzw. "aktiviert". Eine besonders einfache, in kontinuierlichen Prozessen anwendbare und daher gut geeignete Behandlungsmethode ist die Corona-Behandlung (Oberflächenbombardement mit energiereichen Ionen im Hochspannungsfeld). Alternativ kann die zu beschichtende Oberfläche durch Ätzen aktiviert werden. Nach einer ausreichenden Aufrauhung der Oberfläche wird diese in der beschriebenen Weise durch Beschichtung mit Polyanilin oder auch mit Ruß mit einer leitfähigen Schicht versehen. Abgesehen davon könnte eine Polyurethan-Ester-Folie auch auf einer Seite durch Beschichtung mit Ruß leitfähig gemacht werden, indem z.B. eine Rußdispersion durch Rakeln aufgebracht und anschließend das Dispersionsmittel verdampft wird. Die Dicke dieser Schicht kann z.B. 60 µ betragen.

Eine bei allen angegebenen Beispielen bisher am besten geeignete Zwischenschicht 5 besteht vorzugsweise aus einem auch für Heizöltanks zugelassenen Leckschutzvlies. Derartige Leckschutzvliese werden z.B. von der Fa. Baur Vliesstoffe GmbH, DE-91550 Dinkelsbühl, u.a. unter der Bezeichnung "LSV 2" angeboten und sind gekrempelte, kreuzgelegte, beidseitig besprühte Vliese. Diese Vliese werden jedoch unter Anwendung von Ruß zusätzlich ausreichend leitfähig gemacht, so daß ihre Leitfähigkeit z.B. 10³ bis 10⁵ Ohm beträgt.

Wie die beiden beschriebenen Beispiele zeigen, weist die erfindungsgemäße Innenhülle 6 wenigstens zwei Schichten 6a und 6b mit unterschiedlichen Eigenschaften auf. Dabei ist es im Prinzip gleichgültig, ob die zwei oder mehr Schichten wie im Beispiel 1 aus z.B. je einer separaten Folie od. dgl. bestehen und ggf. zu einer einzigen Folie fest miteinander verbunden werden oder ob die Innenhülle wie im Beispiel 2 aus einer einzigen, z.B. die Schicht 6a bildenden Folie od. dgl. hergestellt ist, die durch eine besondere Oberflächenbeschichtung mit einer zweiten Schicht 6b versehen wird, deren Eigenschaften von denen des Grundmaterials der Folie abweichen. Denkbar wäre es auch, eine Innenhülle vorzusehen, die aus einem Material besteht, das beidseitig mit Beschichtungen versehen ist, die unterschiedliche Eigenschaften aufweisen.

Die Beschichtung mit Ruß bzw. Polyanilin oder der Zusatz von Ruß erfolgt mit einer solchen Menge pro Flächeneinheit und/oder mit einer solchen Dicke, daß die elektrisch leitende Schicht 6b einen Oberflächen- und Ableitwiderstand von höchstens 10⁵ bis 10⁸ Ohm und vorzugsweise von weniger als 10⁵ Ohm besitzt. Dadurch ist sichergestellt, daß diese Schicht z.B. der eingangs genannten Richtlinie ZH 1/200 genügt, wonach bei einem Behälter aus nichtleitfähigen oder aufladbaren Stoffen ein Oberflächenwiderstand von 10⁹ Ohm und ein Ableitwiderstand von 10⁸ Ohm nicht überschritten werden sollte.

Die erfindungsgemäße Auskleidung eignet sich für die Anwendung sowohl in stationären Benzintanks im Bereich von Tankstellen od. dgl. als auch in fahrbaren Benzintanks.

Die Erfindung ist nicht auf die beschriebenen Ausführungsbeispiele beschränkt, die sich auf vielfache Weise abwandeln lassen. Dies gilt insbesondere für die nur beispielsweise angegebenen Materialien, die durch andere Materialien mit gleichen oder ähnlichen Eigenschaften ersetzt werden können. Für die Zwischenschicht 5 könnten alternativ z.B. an sich bekannte Metallfaservliese od. dgl. verwendet werden. Dagegen könnte die Innenhülle 6 nach Beispiel 1 auch durch eine andere Technik als Dublieren aus zwei Folien mit entsprechenden Eigenschaften zu einer Einheit zusammengefügt werden, und im Beispiel 2 können andere als die angegebenen Beschichtungsverfahren verwendet werden. Dabei wäre es in Abhängigkeit von den Bedürfnissen und Vorschriften im Einzelfall auch denkbar, die Zwischenschicht 5 und/oder die Innenhülle 6 mit zusätzlichen, vorgewählte Eigenschaften aufweisenden Schichten zu versehen. Weiter versteht sich, daß bei einem mit der erfindungsgemäßen Innenauskleidung versehenen Tank die innere Schicht 6b der Innenhülle 6 mit anderen als den beschriebenen Mitteln geerdet werden kann und daß auch die Zwischenschicht 5 zusätzlich geerdet werden muß, sofern es sich nicht um geerdete Stahltanks handelt, bei denen die Erdung der Zwischenschicht automatisch über die Tankwand erfolgt. Schließlich können die beschriebenen Teile und deren Elemente auch in anderen als den dargestellten und beschriebenen Kombinationen verwendet werden.

## Patentansprüche

1. Innenauskleidung für Flüssigkeits-, insbesondere Benzintanks (1), mit einer flexiblen, benzinbeständigen Innenhülle (6), **dadurch gekennzeichnet, daß** die Innenhülle (6) wenigstens zwei Schichten (6a,6b) enthält, indem sie auf einer der Tankwand zugewandten Seite eine diffusionsdichte Kunststofffolie (6a) und auf ihrer mit der Flüssigkeit in Berührung kommende Seite eine elektrisch leitfähige Polyanilinschicht (6b) oder eine als Dispersion in einem anschließend verdampften Dispersionsmittel aufgebrachte Rußschicht (6b) aufweist.

2. Innnenauskleidung nach Anspruch 1, **dadurch gekennzeichnet, daß** die diffusionsdichte Schicht (6a) eine größere Dicke als die leitfähige Schicht (6b) aufweist.

3. Innenauskleidung nach Anspruch 1 oder 2, **dadurch gekennzeichnet, daß** die diffusionsdichte Schicht (6a) durch eine thermoplastische Polyurethan-Ester-Folie gebildet ist.

4. Innenauskleidung nach Anspruch 3, **dadurch gekennzeichnet, daß** die diffusionsdichte Schicht (6a) eine Dicke von etwa 600 µ bis 700 µ aufweist.

5. Innenauskleidung nach Anspruch 1 oder 2, **dadurch gekennzeichnet, daß** die diffusionsdichte Schicht (6a) durch eine Fluorkunststoff-Folie gebildet ist.

6. Innenauskleidung nach Anspruch 5, **dadurch gekennzeichnet, daß** die diffusionsdichte Schicht (6a) eine Dicke von etwa 400 - 500 µ aufweist.

7. Innenauskleidung nach einem der Ansprüche 5 oder 6, **dadurch gekennzeichnet, daß** die leitfähige Schicht (6b) eine Dicke von etwa 2 bis 150 µ aufweist.

8. Innenauskleidung nach einem der Ansprüche 1 bis 7, **dadurch gekennzeichnet, daß** die Innenhülle (6) aus zwei Folien mit den Schichten (6a,6b) entsprechenden Eigenschaften erhalten ist, wobei diese Folien durch Dublieren zu einer zusammenhängenden Innenhülle (6) vereinigt sind.

9. Innenauskleidung nach Anspruch 7, **dadurch gekennzeichnet, daß** die leitfähige Schicht (6b) durch Zubereitung einer Polyanilin-Dispersion, Aufbringen der Dispersion auf die Folie und anschließendes Härten hergestellt ist.

10. Innenauskleidung nach einem der Ansprüche 1 bis 9, **dadurch gekennzeichnet, daß** die elektrisch leitende Schicht (6b) einen Oberflächen- und Ableitwiderstand von höchstens 10⁵ bis 10⁸ Ohm, vorzugsweise von weniger als 10⁵ Ohm besitzt.

11. Innenauskleidung nach einem der Ansprüche 1 bis 10, **dadurch gekennzeichnet, daß** sie ferner eine zwischen der Tankwand und der diffusionsdichten Schicht (6a) der Innenhülle (6) anzuordnende, luftdurchlässige, elektrisch leitende Zwischenschicht (5) enthält.

12. Flüssigkeits-, insbesondere Benzintank mit einer Innenauskleidung nach einem oder mehreren der Ansprüche 1 bis 11, **dadurch gekennzeichnet, daß** die leitfähige Schicht (6b) geerdet ist.

13. Tank nach Anspruch 12, **dadurch gekennzeichnet, daß** er einen Dom (2) aufweist und die leitfähige Schicht (6b) mit Hilfe einer durch den Dom (2) nach außen geführten, elektrisch leitenden Lasche (10) geerdet ist.

14. Tank nach Anspruch 12 oder 13, **dadurch gekennzeichnet, daß** die Innenhülle (6) vorkonfektioniert und an ihren Nahtstellen verschweißt ist.

## Claims

1. Inner lining for liquid tanks, in particular petrol tanks (1), having a flexible petrol-resistant inner jacket (6), **characterised in that** the inner jacket (6) contains at least two layers (6a, 6b), by having a plastic material film (6a) which is impervious to diffusion on one side which is orientated towards the tank wall, and by having, on its side which comes into contact with the liquid, an electrically conductive polyaniline layer (6b) or a carbon black layer (6b) which is applied as a dispersion in a subsequently evaporated dispersion medium.

2. Inner lining according to claim 1, **characterised in that** the layer (6a) which is impervious to diffusion has a greater thickness than the conductive layer (6b).

3. Inner lining according to claim 1 or 2, **characterised in that** the layer (6a) which is impervious to diffusion is formed by a thermoplastic polyurethane ester film.

4. Inner lining according to claim 3, **characterised in that** the layer (6a) which is impervious to diffusion has a thickness of approximately 600 m to 700 m.

5. Inner lining according to claim 1 or 2, **characterised in that** the layer (6a) which is impervious to diffusion is formed by a fluoroplastic film.

6. Inner lining according to claim 5, **characterised in that** the layer (6a) which is impervious to diffusion has a thickness of approximately 400 - 500 m.

7. Inner lining according to one of the claims 5 or 6, **characterised in that** the conductive layer (6b) has a thickness of approximately 2 to 150 m.

8. Inner lining according to one of the claims 1 to 7, **characterised in that** the inner jacket (6) is obtained from two films with properties corresponding to the layers (6a, 6b), these films being combined by doubling into a connected inner jacket (6).

9. Inner lining according to claim 7, **characterised in that** the conductive layer (6b) is produced by preparation of a polyaniline dispersion, application of the dispersion on the film and subsequent hardening.

10. Inner lining according to one of the claims 1 to 9, **characterised in that** the electrically conductive layer (6b) has a surface- and leakage resistance of at most 10⁵ to 10⁸ ohms, preferably of less than 10⁵ ohms.

11. Inner lining according to one of the claims 1 to 10, **characterised in that** it further contains an air-permeable, electrically conductive, intermediate layer (5) which should be disposed between the tank wall and the layer (6a) of the inner jacket (6), which layer is impervious to diffusion.

12. Liquid tank, in particular petrol tank, having an inner lining according to one or more of the claims 1 to 11, **characterised in that** the conductive layer (6b) is earthed.

13. Tank according to claim 12, **characterised in that** it has a dome (2) and the conductive layer (6b) is earthed by means of an electrically conductive link (10) which is led to the exterior through the dome (2).

14. Tank according to claim 12 or 13, **characterised in that** the inner jacket (6) is prefabricated and is welded at its seam positions.

## Revendications

1. Revêtement intérieur pour des réservoirs à liquide; en particulier des réservoirs à essence (1), avec une enveloppe intérieure (6) flexible et résistante à l'essence, **caractérisé en ce que** l'enveloppe intérieure contient au moins deux couches (6a, 6b) du fait qu'elle présente sur un côté tourné vers la paroi du réservoir un film plastique (6a) étanche à des diffusions et sur son côté arrivant en contact avec le liquide une couche de polyaniline (6b) électroconductrice ou une couche de suie (6b) appliquée sous forme de dispersion dans un agent dispersant évaporé ensuite.

2. Revêtement intérieur selon la revendication 1, **caractérisé en ce que** la couche (6a) étanche à la diffusion présente une épaisseur supérieure à la couche (6b) conductrice.

3. Revêtement intérieur selon la revendication 1 ou 2, **caractérisé en ce que** la couche (6a) étanche à la diffusion est formée par un film thermoplastique d'ester de polyuréthane.

4. Revêtement intérieur selon la revendication 3, **caractérisé en ce que** la couche (6a) étanche à la diffusion présente une épaisseur d'environ 600 µ à 700 µ.

5. Revêtement intérieur selon la revendication 1 ou 2, **caractérisé en ce que** la couche (6a) étanche à la diffusion est formée par un film de matière synthétique fluorée.

6. Revêtement intérieur selon la revendication 5, **caractérisé en ce que** la couche (6a) étanche à la diffusion présente une épaisseur d'environ 400 à 500 µ.

7. Revêtement intérieur selon l'une quelconque des revendications 5 ou 6, **caractérisé en ce que** la couche (6b) conductrice présente une épaisseur d'environ 2 à 150µ.

8. Revêtement intérieur selon l'une quelconque des revendications 1 à 7, **caractérisé en ce que** l'enveloppe intérieure (6) est obtenue à partir de deux films avec les propriétés correspondant aux couches (6a, 6b), ces films étant réunis par doublage pour former une enveloppe intérieure (6) cohérente.

9. Revêtement intérieur selon la revendication 7, **caractérisé en ce que** la couche (6b) conductrice est fabriquée par la préparation d'une dispersion de polyaniline, l'application de la dispersion sur le film et un durcissement consécutif.

10. Revêtement intérieur selon l'une quelconque des revendications 1 à 9, **caractérisé en ce que** la couche (6b) électroconductrice présente une résistance de surface et une résistance de fuite de 10⁵ à 10⁸ Ohms au maximum, de préférence de moins de 10⁵ Ohms.

11. Revêtement intérieur selon l'une quelconque des revendications 1 à 10, **caractérisé en ce qu'**il contient également une couche intermédiaire (5) électroconductrice, perméable à l'air et à disposer entre la paroi du réservoir et la couche (6a) étanche à la diffusion de l'enveloppe intérieure (6).

12. Réservoir à liquide, en particulier réservoir à essence avec revêtement intérieur selon l'une quelconque ou plusieurs des revendications 1 à 11, **caractérisé en ce que** la couche (6b) conductrice est reliée à la terre.

13. Réservoir selon la revendication 12, **caractérisé en ce qu'**il présente un dôme (2) et la couche (6b) conductrice est reliée à la terre à l'aide d'une patte (10) électroconductrice et guidée vers l'extérieur par le dôme (2).

14. Réservoir selon la revendication 12 ou 13, **caractérisé en ce que** l'enveloppe intérieure (6) est préconfectionnée et est soudée sur ses points de soudure.
